## Europäisches Patentamt
## European Patent Office
## Office européen des brevets

(19)

(11) Veröffentlichungsnummer: **0 177 831**
A2

(12)
# EUROPÄISCHE PATENTANMELDUNG

(21) Anmeldenummer: **85112066.7**

(22) Anmeldetag: **24.09.85**

(51) Int. Cl.⁴: **F 16 L 59/16,** F 16 L 51/00, F 24 D 3/00

(30) Priorität: **10.10.84 DE 3438191**

(43) Veröffentlichungstag der Anmeldung: **16.04.86 Patentblatt 86/16**

(84) Benannte Vertragsstaaten: **AT CH FR LI NL SE**

(71) Anmelder: **Energie- und Verfahrenstechnik, Umwelttechnik E V K Pegnitz Dr.-Ing. Christian Koch, Mühlweg 13, D-8570 Pegnitz (DE)**

(72) Erfinder: **Koch, Christian, Dr.-Ing., Mühlweg 13, D-8570 Pegnitz (DE)**

(54) **Einmalkompensator für Fernwärmeleitungen.**

(57)  Die Aufnahme der Wärmedehnung von Kunststoffmantelrohren durch ein doppeltgedichtetes Dehnungselement, welches im gedehnten Zustand zu der Gleitringdichtung eine metallische Dichtung aufweist, ermöglicht die fertige Verlegung der Fernwärmeleitungen ohne Kompensationselemente.

Nach Inbetriebnahme der Leitungen kann der dann doppeltgedichtete Kompensator verschweißt werden. Dabei sind alle Elemente des Kompensationselementes so ausgebildet, daß sie den Festigkeitsanforderungen der Gesamtleitung entsprechen und eine nachträgliche Isolierschaumisolation ohne Probleme möglich ist.

Fig. 3        Fig. 4

/

Zusammenfassung von der Patentanmeldung und
Zusatzpatentanmeldung Einmalkompensator für
Fernwärmeleitungen P 34 191.0 und P 35 04 124.2
sowie G 84 30 633.5 und G 85 03 348.0

Einmalkompensator für Fernwärmeleitungen

Die Erfindung betrifft eine Vorrichtung zum Einbau von
Fernwärmeleitungen in Form von Kunststoffmantelrohren, die
es ermöglicht, auf einen kontinuierlichen Kompensator zu
verzichten.

Es ist bekannt, daß Kunststoffmantelrohrleitungen je nach
Überdickung und Durchmesser nur bis zu einer bestimmten
Verlegelänge kompensatorlos verlegt werden können. Nach
dieser Maximallänge muß in das Rohr ein Kompensator
eingebaut werden oder das Rohr muß durch Aufheizung im
unverfülltem Zustand vorgespannt werden. Die PA 24 19 132
umgeht nun diesen Umstand, indem der erforderliche Kompensator nicht in einer dauerhaften Form ausgebildet wird, sondern das Rohr nach der ersten Dehnung an den zusätzlich
eingebrachten Hülsen verschweißt wird.

Nachteil der Erfindung nach PA 24 19 132 ist es, daß der
Einmalkompensator relativ teuer und platzaufwendig ist.

Dieses kann erfindungsgemäß dadurch umgangen werden, daß die
Dehnkupplung als Schiebedichtung mit begrenzter Dehnung
ausgebildet wird, die im gedehnten Zustand zu der O-
Ringdichtung eine Metalldichtung besitzt. Dadurch wird
gegenüber dem blanken Rohr nur eine geringe Verdickung am
Rohr erzeugt, die auch nachträglich nach dem Verschweißen
gut isoliert werden kann.

Fig. 1 zeigt den Aufbau der Verschiebekupplung im
Einbauzustand.

Fig. 2 zeigt den Aufbau der Verschiebekupplung nach
Aufheizung der Rohrleitung im eingesandeten Zustand.

Dies ist ersichtlich, daß die bearbeiteten Enden der beiden
innersten Rohre im gedehnten Zustand eine metallische Dichtung bilden.

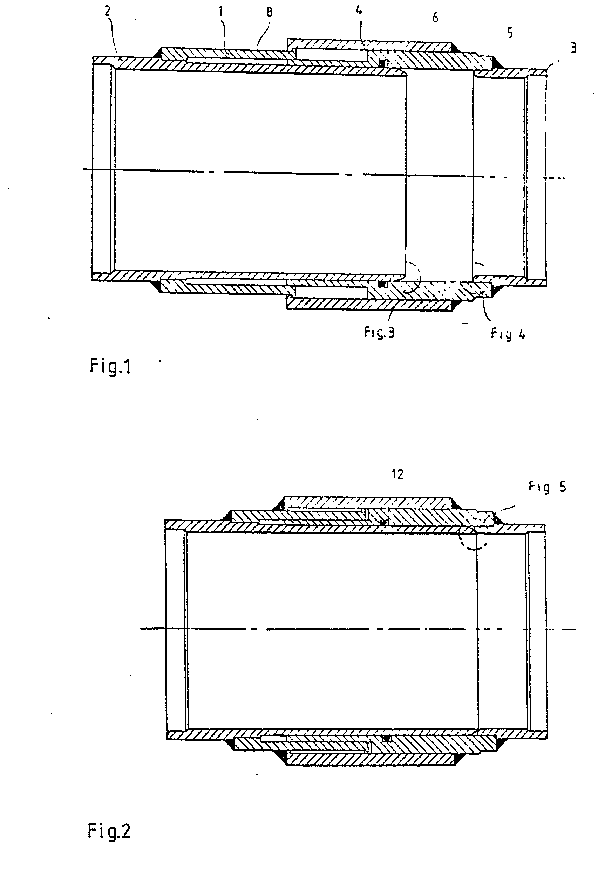

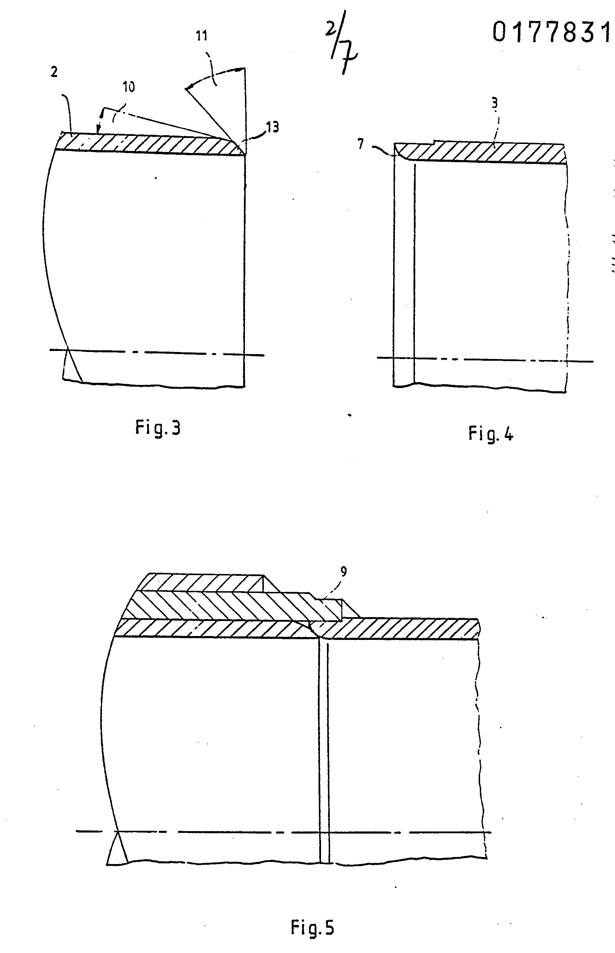

Fig.1 zeigt den Aufbau der Verschiebekuppluung mit den Elementen Aufschweißhülse I(1), dem Dehnrohr (2), dem Anschlußrohr (3), der Aufschweißhülse II(4) und dem Hüllrohr (5), in
dem sich ei oder mehrere Dichtringe (6) befinden. Das Anschlußrohr 3 besitzt eine runde Endphases 7 entsprechend
Fig.3, welche den einen Teil der Dichtung im gedehnten
Zustand bildet. Das Dehnrohr 2 besitzt einen Endteil mit
hoher Oberflächengüte 8, beispielsweise geschliffen, welches
sich beim Dehnvorgang in das Hüllrohr 5 hineinbewegt.

Fig. 4 zeigt in vergrößertem Ausschnitt die Gestaltung des bearbeiteten Endes des Dehnrohres 2. Die Phase 11 mit einem Winkel von 30 - 60 grd. bildet im gedehnten Zustand mit dem gerundeten Ende 7 des Anschlußrohres 3 eine metallische Dichtung 9, während die Anschrägung 10 mit einem Winkel von 10 - 20 grd. dazu dient, das Dehnrohr 2 problemlos über die O-Ringe 6 zu schieben.

Fig. 5 zeigt die Paarung der beiden Enden, die auch eine zentrierende Wirkung der Rohre zueinander bewirken.

Durch die besondere Gestaltung der Aufschweißhülse I (1) und II (4) kann die endgültige Verschweißung des Kompensators (Fig.2) so stattfinden, daß keine direkte Wärmeableitung an das Wasser möglich ist, da nicht auf dem wassergeführten Rohr geschweißt werden muß. Darüber hinaus verhindert das Zusammenspiel der beiden Einschweißhülsen die Demontierbarkeit des Einmalkompensators, womit eine Beschädigung der empfindlichen Teile des Kompensators verhindert wird.

Überdies bilden die eingebauten und verschweißten Kompensatorteile strömungsseitig ein einheitlich durchgehendes Rohrstück, das einerseits die Strömungsverluste 50 minimiert, andererseits keine Toträume mehr für Ablagerungen aufweist.

Die erfindungsgemäße Vorrichtung kann dann wie folgt hergestellt werden.

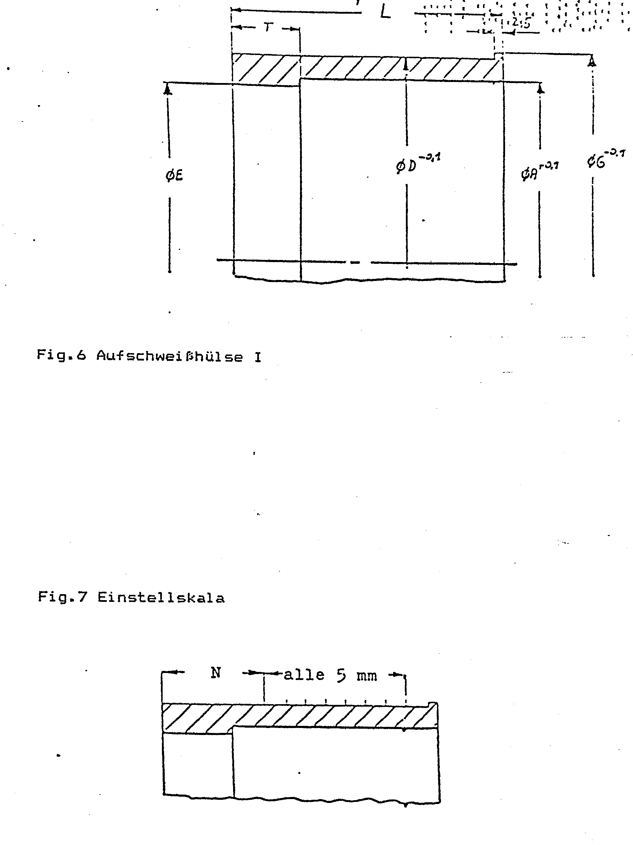

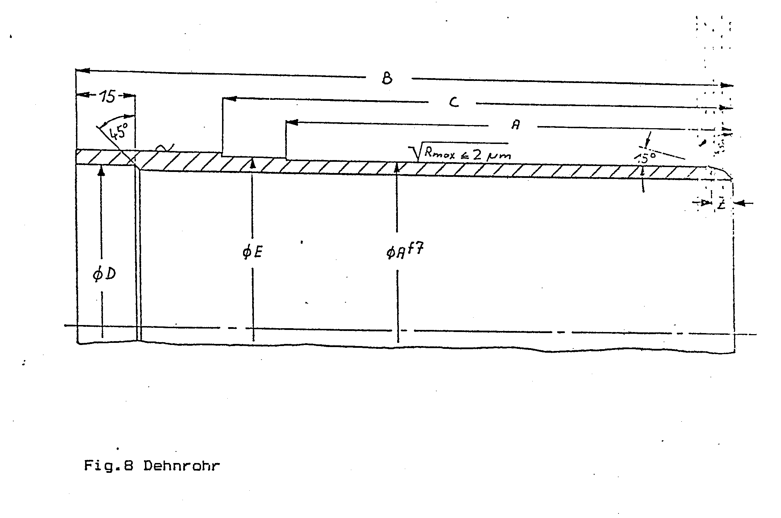

Das Dehnrohr (Fig.8) wird mit der Aufschweißhülse I (Fig.6) verschweißt.

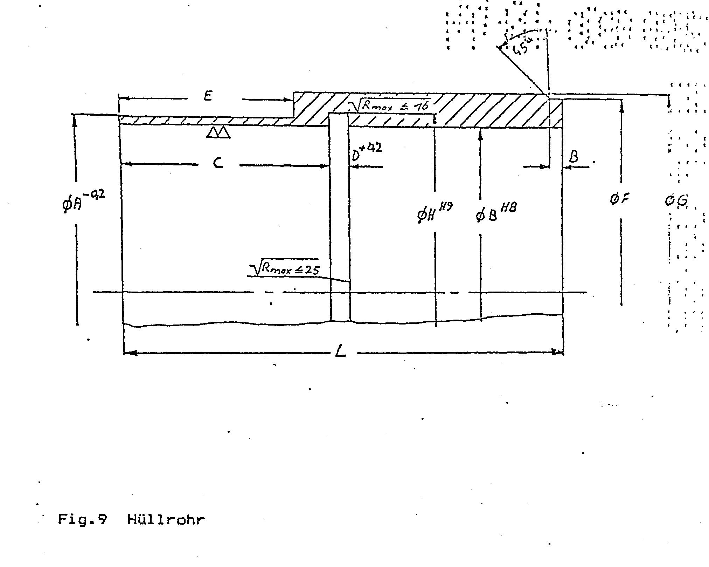

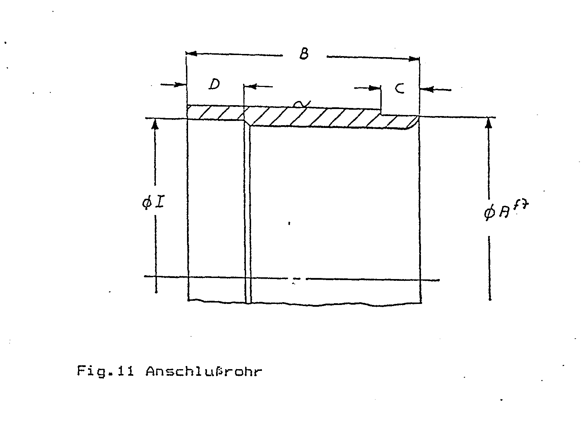

Das Hüllrohr (Fig.9) wird mit dem Anschlußrohr (Fig.11) verschweißt.

Die Gleitflächen des Hüllrohres, des Dehn- und der Aufschweißhülse werden leicht eingefettet.

Der O-Ring wird eingelegt

Der Kompensator wird so weit zusammengeschoben, bis das Dehnrohr und das Anschlußrohr metallischen Kontakt haben.

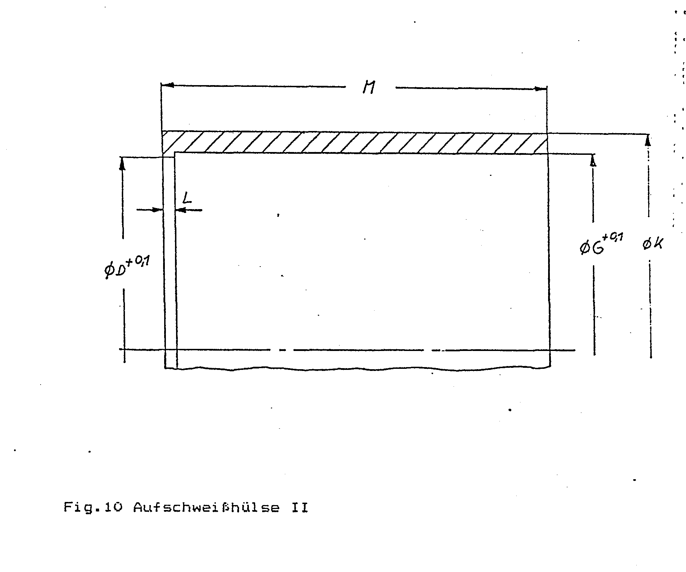

Die Aufschweißhülse II (Fig.10) wird so weit über den Kompensator geschoben, bis die Kante des Rohres die Position der 1. Markierung der Einstellskala (Fig.7) erreicht hat. Genau bei dieser Stellung wird die Aufschweißhülse mit dem Hüllrohr verschweißt.

Die Aufschweißhülse II wird auf die Aufschweißhülse I im betriebswarmen Zustand aufgeschweißt, wobei die Wärmeableitung von der Schweißnaht zum wasserführenden Rohr über eine ausreichende Zungenlänge der Aufschweißhülse I verzögert wird.

0177831

Dieses führt dazu, daß die Schweißflamme nicht zu stark gekühlt wird und die Schweißnaht einen guten Schweißfaktor erreichen kann.

Die Einstellskala (Fig.7) ist auf der Aufschweißhülse I in Form von kleinen abgerundeten Kerben in gleichen Abständen (46) markiert, wobei je nach Einbauverhältnissen der richtige Einbauzustand der Kompensatoren angezeigt ist.

Zur näheren Erläuterung der Erfindung werden Herstellungsbeispiele der Kompensatoreinzelteile für die Nennweiten 80 bis 200 aufgeführt:

Die Tab.1 zeigt die Hauptabmessungen der Aufschweißhülse I (Fig.6)

Die Tab.2 beinhaltet das Maß über die Position der 1. Markierung (45) der Einstellskala (Fig.7)

Die Tab.3 zeigt die Hauptabmessungen des Dehnrohres (Fig.8)

Die Tab.4 zeigt die Hauptabmessungen des Hüllrohres (Fig.9)

Die Tab.5 zeigt die Hauptabmessungen der Aufschweißhülse II (Fig.10)

Die Tab.6 zeigt die Hauptabmessungen des Anschlußrohres (Fig.11)

Die Tab.7 zeigt zusammenfassend die wesentlichen Daten des Einmalkompensators.

| DN | ISO-Rohr | 50 | 51 | Ø52 | Ø54 | Ø53 | Ø55 |
|---|---|---|---|---|---|---|---|
| 80 | 101.6x 8.0 | 67.5 | 17 | 87.0 | 90.0 | 98.9 | 101.0 |
| 100 | 133.0x11.0 | 73.4 | 17 | 113.0 | 116.0 | 125.5 | 129.0 |
| 125 | 159.0x11.0 | 83.5 | 17 | 138.0 | 140.0 | 152.3 | 156.0 |
| 150 | 193.7x14.2 | 95.7 | 17 | 167.0 | 170.0 | 182.5 | 186.0 |
| 175 | 219.1x14.2 | 105.0 | 17 | 192.0 | 194.0 | 209.7 | 213.0 |
| 200 | 244.5x14.2 | 106.0 | 17 | 218.0 | 221.0 | 235.1 | 239.0 |

Tab.1

| DN | 80 | 100 | 125 | 150 | 175 | 200 |
|---|---|---|---|---|---|---|
| N | 25.5 | 26.4 | 27.5 | 28.7 | 30.0 | 30.0 |

Tab.2

| DN | ISO-Rohr | Ø22 | Ø21 | Ø20 | 16 | 19 | 18 | 23 | 24 |
|---|---|---|---|---|---|---|---|---|---|
| 80 | 88.9x 5.0 | 86.0 | 87.0 | 82.5 | 147 | 112.3 | 129.3 | 45grd | 15grd |
| 100 | 114.3x 5.0 | 112.0 | 113.0 | 107.9 | 170 | 123.2 | 140.2 | 45grd | 15grd |
| 125 | 139.7x 6.3 | 136.0 | 138.0 | 132.5 | 195 | 148.5 | 165.5 | 45grd | 15grd |
| 150 | 168.3x 5.6 | 166.0 | 167.0 | 160.3 | 220 | 172.9 | 189.9 | 45grd | 15grd |
| 175 | 193.7x 6.3 | 190.0 | 192.0 | 184.7 | 235 | 189.0 | 206.0 | 45grd | 15grd |
| 200 | 219.1x 5.6 | 217.0 | 218.0 | 210.1 | 240 | 191.0 | 208.0 | 45grd | 15grd |

Tab.3

| DN | ISO-Rohr | 38 | 36 | 35 | 37 |
|---|---|---|---|---|---|
| 80 | 101.6x 8.8 | 111.3 | 52.0 | 43.0 | 4.8 |
| 100 | 133.0x12.5 | 121.3 | 57.0 | 48.0 | 4.8 |
| 125 | 159.0x12.5 | 144.7 | 66.0 | 57.0 | 6.0 |
| 150 | 193.7x16.0 | 168.7 | 77.0 | 68.0 | 7.2 |
| 175 | 219.1x16.0 | 182.7 | 85.0 | 76.0 | 6.0 |
| 200 | 244.5x16.0 | 184.8 | 86.0 | 77.0 | 6.0 |

| DN | Ø39 | Ø40 | Ø41 | Ø42 | Ø43 |
|---|---|---|---|---|---|
| 80 | 90.0 | 93.0 | 86.0 | 98.9 | 101.0 |
| 100 | 116.0 | 119.0 | 112.0 | 125.5 | 129.0 |
| 125 | 140.0 | 144.9 | 136.0 | 152.3 | 156.0 |
| 150 | 170.0 | 176.8 | 166.0 | 182.5 | 186.0 |
| 175 | 194.0 | 198.9 | 190.0 | 209.7 | 213.0 |
| 200 | 221.0 | 225.9 | 217.0 | 235.1 | 239.0 |

Tab.4

| DN | ISO-Rohr | 31 | Ø32 | Ø33 | Ø34 |
|----|----------|------|-------|-------|-------|
| 80 | 114.3x 8.0 | 96.3 | 98.9 | 101.0 | 111.0 |
| 100 | 152.4x14.2 | 101.3 | 125.5 | 129.0 | 140.2 |
| 125 | 177.8x14.2 | 124.7 | 152.3 | 156.0 | 168.6 |
| 150 | 219.1x20.0 | 149.7 | 182.5 | 186.0 | 200.2 |
| 175 | 244.5x17.5 | 162.7 | 209.7 | 213.0 | 229.0 |
| 200 | 267.0x16.0 | 164.8 | 235.1 | 239.0 | 255.0 |

Tab.5

| DN | ISO-Rohr | Ø30 | 26 | 38 | Ø29 | 27 |
|----|----------|------|-----|-----|-------|-----|
| 80 | 88.9x 5.0 | 86.0 | 60 | 10 | 82.5 | 15 |
| 100 | 114.3x 5.0 | 112.0 | 60 | 10 | 107.9 | 15 |
| 125 | 139.7x 6.3 | 136.0 | 60 | 10 | 132.5 | 15 |
| 150 | 168.3x 5.6 | 166.0 | 60 | 10 | 160.3 | 15 |
| 175 | 193.7x 6.3 | 190.0 | 60 | 10 | 184.7 | 15 |
| 200 | 219.1x 5.6 | 217.0 | 60 | 10 | 210.1 | 15 |

Tab.6

| DN | Stahlrohr-durchmesser mm | D(max) mm | max. Einbau-länge mm | max. Dehnungs-aufnahme mm | Gewicht kg |
|----|-----|-----|-----|-----|-----|
| 20 | 26.9 | 42.8 | 173 | 15 | 0.7 |
| 25 | 33.7 | 52.2 | 192 | 21 | 1.2 |
| 32 | 42.4 | 61.6 | 196 | 22 | 1.5 |
| 40 | 48.3 | 65.8 | 197 | 23 | 1.6 |
| 50 | 60.3 | 77.8 | 207 | 26 | 2.0 |
| 65 | 76.1 | 97.9 | 229 | 33 | 3.4 |
| 80 | 88.9 | 111.0 | 242 | 37 | 5.5 |
| 100 | 114.3 | 140.2 | 270 | 42 | 8.7 |
| 125 | 139.7 | 168.6 | 303 | 51 | 14.2 |
| 150 | 168.3 | 200.2 | 340 | 62 | 20.2 |
| 175 | 193.7 | 229.0 | 362 | 70 | 27.9 |
| 200 | 217.1 | 255.0 | 368 | 71 | 31.6 |
| 225 | 244.5 | 283.8 | 390 | 78 | 41.9 |
| 250 | 273.0 | 312.8 | 390 | 77 | 47.2 |
| 300 | 323.9 | 368.0 | 433 | 90 | 70.5 |
| 350 | 355.6 | 400.2 | 430 | 88 | 80.4 |
| 400 | 406.4 | 455.6 | 463 | 100 | 122.8 |
| 450 | 457.2 | 506.8 | 467 | 100 | 123.6 |
| 500 | 508.0 | 557.8 | 476 | 104 | 167.8 |

Tab. 7

0177831

Patentansprüche

Anspruch 1

Vorrichtung zur Vorspannung von Fernwärmeleitungen mit einem Einmalkompensator, der in die Fernwärmeleitung eingeschweißt wird, die Rohrleitung nach dem Einschweißen eingesandet wird, dadurch gekennzeichnet, daß die Rohrleitung nach dem Aufheizen der Rohrleitung bei Inbetriebnahme durch eine Schweißnaht zwischen dem Hüllrohr (5) und dem Dehnrohr (2) arretiert wird und daß zwischen dem Hüllrohr (5) und dem Dehnrohr (2) ein oder mehrere Dichtringe (6) angeordnet sind.

Anspruch 2 Vorrichtung nach Anspruch 1, d. g. daß das Dehnrohr (2) eine hohe Oberflächengüte (8) aufweist und der Dichtring (6) im Hüllrohr (5) in einer Nut (12) liegt.

Anspruch 3 Vorrichtung nach den Ansprüchen 1 und 2, d. g. daß die Enden der Innenrohre (2) und (3) als Keil (13) und mit Radius (7) ausgebildet sind und nach Aufheizen der Rohrleitung eine metallische Dichtung (9) bilden.

Anspruch 4 Vorrichtung nach Anspruch 1, d.g. daß zwei Aufschweißhulsen I und II verwendet werden, die die Demontage des Kompensators verhindern und die Wärmeableitung der Schweißnaht an die wasserführenden Rohre so verringert, daß eine hohe Schweißnahtgüte erreicht wird.

Anspruch 5 Vorrichtung nach Anspruch 4, d. g. daß die Aufschweißhulse I(1) am Ende eine Erweiterung besitzt, die durch Verhaken mit der Aufschweißhülse II(2) eine Demontage verhindert.

Anspruch 6 Vorrichtung nach Anspruch 3-5, d. g. daß die Rohrleitung je nach vorgesehener Verlegelänge mit einer solchen Dehnlänge der Verschiebekupplung ausgestattet wird, daß sich bei der Aufheizung garantiert ein Anliegen der beiden Innenrohre (2) und (3) zueinander und damit eine Dichtwirkung (9) ergibt, was sich durch entsprechende Markierungen an der Aufschweißhülse I(1), welches sich in das Hüllrohr (3) schieben soll, sichern läßt.

4

Anspruch 7

Vorrichtung nach den Ansprüchen 4 und 6, d. g. daß auf der Aufschweißhülse I eine Einstellskala angebracht ist, die auf die vorgesehene Rohrdehnung von 15 - 104 mm bezogen ist.

Anspruch 8 Vorrichtung nach den Ansprüchen 4 und 5, d. g. daß die Aufschweißhülse I auf dem Hüllrohr bei der Ausdehnung dann knapp am Anschlag ist, wenn die Dichtung zwischen Anschlußrohr und Dehnrohr an den Dichtkanten entsteht.

Anspruch 9 Vorrichtung nach den Ansprüchen 1 und 4, d. g. daß die Schweißnaht nach Inbetriebnahme der Rohrleitung zwischen Aufschweißhülse I und II einen genügend großen Wärmeleitweg zu den wasserführenden Stahlrohren besitzt.

Anspruch 10 Vorrichtung nach den Ansprüchen 1 - 9, d. g. daß der Einmalkompensator zum Einbau im Montagezustand arretiert wird und erst nach dem Einschweißen in die Rohrleitung die Arretierung entfernt wird.

Fig.1

Fig.2

1/7

6

Fig.3

Fig.4

Fig.5

$\phi E$  $\phi D^{-0,1}$  $\phi A^{+0,1}$  $\phi G^{-0,1}$

L

T

2,5

Fig.6 Aufschweißhülse I

Fig.7 Einstellskala

N — alle 5 mm

Fig.8 Dehnrohr

Fig.9   Hüllrohr

Fig.10 Aufschweißhülse II

Fig.11 Anschlußrohr